Europäisches Patentamt

European Patent Office

Office européen des brevets

(11) Veröffentlichungsnummer: **0 467 283 A2**

# EUROPÄISCHE PATENTANMELDUNG

(21) Anmeldenummer: **91111832.1**

(22) Anmeldetag: **16.07.91**

(51) Int. Cl.⁵: **A01F 15/04**

(30) Priorität: **18.07.90 DE 9010741 U**

(43) Veröffentlichungstag der Anmeldung:
**22.01.92 Patentblatt 92/04**

(84) Benannte Vertragsstaaten:
**BE DE FR GB NL**

(71) Anmelder: **Karl Mengele & Söhne,
Maschinenfabriken GmbH & Co.
Augsburger Strasse 50
W-8870 Günzburg(DE)**

(72) Erfinder: **Beck, Gerhard
Buchenweg 5
W-8876 Jettingen-Scheppach(DE)**

(74) Vertreter: **Kahler, Kurt, Dipl.-Ing.
Postfach 1249 Gerberstrasse 3
W-8948 Mindelheim(DE)**

(54) **Ballenpresse für landwirtschaftliches Erntegut.**

(57) Zur Erzielung einer einfachen Einstellbarkeit der Vorverdichtung bei geringer Antriebsleistung und unter Vermeidung von Erntegutverlusten bei einer Ballenpresse (1) für landwirtschaftliches Erntegut mit einem Ballenkanal (2), einem darin hin- und herbewegbaren Preßkolben (3), einer im Boden des Ballenkanals (2) vorgesehenen Überschiebeöffnung (4), einem Vorpreßkanal (5), der mit seinem oberen Ende an die Überschiebeöffnung (4) angeschlossen ist und einer Vorpreßtrommel (6), die am unteren Ende des Vorpreßkanals (5) angeordnet ist, wobei eine Begrenzungswand (7, 8) des Vorpreßkanals (5) zur Veränderung des Durchlaßquerschnittes verstellbar ist, wird vorgeschlagen, an der Begrenzungswand (7, 8) des Vorpreßkanals (5) im Anschluß an den Umlaufbereich (A) der Vorpreßtrommel (6) an ihrem unteren Ende ein Schwenkgelenk (9) anzuordnen und mit einer Vielzahl von Rollen (10) zu besetzen, sowie am zur Überschiebeöffnung (4) hin gelegenen Ende gegen eine Federanordnung (11) abzustützen.

EP 0 467 283 A2

Die Erfindung betrifft eine Ballenpresse für landwirtschaftliches Erntegut mit den oberbegrifflichen Merkmalen des Patentanspruchs 1.

Eine derartige Ballenpresse ist aus der EP-A-0 324 412 bekannt. Dort ist bei einer gattungsgemäßen Ballenpresse eine Begrenzungswand (Vorderwand und/oder Rückwand) des Vorpreßkanals zur Veränderung des Durchlaßquerschnittes verstellbar, um hierdurch eine unterschiedliche Vorpressung zu erzielen. Nähere Angaben zur Art der Verstellung erfolgen hier nicht. Problematisch bei derartigen Ballenpressen ist jedoch, daß bei einer Verengung des Durchlaßquerschnittes des Vorpreßkanals die Verstopfungsqefahr und die Antriebsleistung für die Ballenpresse aufgrund der hohen Reibung im Vorpreßkanal stark ansteigt.

In der EP-A-0 339 734 wurde bereits vorgeschlagen, im Vorpreßkanal einer ähnlichen Ballenpresse rotierende Mittel, insbesondere Walzen, am Bodenblech des Vorpreßkanals vorzusehen. Die Walzen sind hierbei jedoch ausschließlich in dem von dem Zuführrotor überstrichenen Bereich angeordnet, so daß bei der Förderung des Erntegutes, insbesondere durch sich einklemmendes Erntegut zwischen den Förderzinkenspitzen und den Walzen die Erntegut-Halme in die Spalten zwischen den einzelnen Walzen gedrängt werden können. Hierdurch kann Erntegut nach außen treten, so daß unerwünschte Erntegutverluste entstehen. Zum anderen werden die Walzen durch das in die Spalten eingeführte Erntegut behindert und abgebremst, so daß die freie Rotierbarkeit der Walzen nicht mehr gegeben ist. Weiterhin ist eine Einstellmöglichkeit des Vorpreßkanals bei dieser Anordnung der Walzen nicht gegeben, da diese unmittelbar an der Peripherie des von den Förderzinken überstrichenen Bereiches angeordnet sind. Eine Verengung des Preßkanal-Querschnitts, wie dies bei der erstgenannten Druckschrift angedeutet ist, um die Vorverdichtung des Erntegutes je nach Erntebedingungen zu variieren, ist somit nicht möglich. Zudem sind die Lagerstellen der Walzen hoch belastet, da sich zwischen dem umlaufenden Zinken und den Walzen Erntegut festklemmen kann.

Demzufolge liegt der Erfindung die Aufgabe zugrunde, eine Ballenpresse für landwirtschaftliches Erntegut zu schaffen, bei der Erntegutverluste vermieden werden und eine einfache Einstellbarkeit der Vorverdichtung bei geringer Antriebsleistung ermöglicht wird.

Diese Aufgabe wird gelöst durch eine Ballenpresse mit den Merkmalen des Patentanspruchs 1.

Durch die Anordnung des Schwenkgelenks erst im Anschluß an den Umlaufbereich der Vorpreßtrommel wird erreicht, daß das Schwenkgelenk und damit auch die damit verbundene schwenkbare Begrenzungswand durch die umlaufende Vorpreßtrommel selbst nicht beaufschlagt wird, sondern erst von dem Preßgutstrang, der von der Vorpreßtrommel in den Vorpreßkanal weiterbefördert wird. Dabei ist die Hauptbelastungsrichtung parallel zu der Begrenzungswand ausgerichtet, so daß Erntegut-Halme zwischen den Rollen nicht mehr durchtreten können. Zudem wird ein Einklemmen von Erntegut durch diese Förderrichtung parallel zu der Haupterstreckungsrichtung der Begrenzungswand zuverlässig unterbunden, da die Erntegut-Halme im Bereich nach der Vorpreßtrommel bereits stark verfilzt sind und somit einzelne Erntegut-Halme den damit bereits entstandenen Erntegutstrang kaum verlassen können. Hierdurch wird eine freie Rotierbarkeit der Rollen erreicht, so daß sich eine sehr geringe Reibung im Vorpreßkanal und damit eine geringe Antriebsleistung ergibt. Zur weiteren Reduzierung der Reibung können auch beide Begrenzungswände (Vorderwand und Rückwand) derartig ausgebildet sein. Diese doppelte Ausführung der mit Rollen besetzten Begrenzungswände ist bei der EP-A-0 339 734 aufgrund der Anbringung im Umlaufbereich des Förderers nicht möglich.

Zudem ergibt sich durch die sich in Preßrichtung geradlinig erstreckende Begrenzungswand gegenüber der konkav gewölbten Wand im Umlaufbereich des Förderers eine weitere Reduzierung der Einklemmgefahr von Erntegut-Halmen in den für die freie Drehbarkeit der Rollen unumgänglichen Spalten zwischen den einzelnen Walzen.

Weiterhin ergibt sich durch die Anordnung der Begrenzungswand erst nach dem Umlaufbereich der Vorpreßtrommel der Vorteil, daß die Lagerstellen der Walzen bzw. Rollen durch die umlaufenden Zinken der Vorpreßtrommel und dadurch verursachten Preßdrücke selbst nicht belastet werden, so daß diese Einheit kompakter und kleinbauender ist. Damit kann eine derartige mit Rollen versehene Begrenzungswand ohne zusätzlichen Platzaufwand anstelle starrer Begrenzungswände eingesetzt werden.

Von besonderem Vorteil ist die federnde Abstützung der mit Rollen versehenen Begrenzungswand, da hierdurch eine selbsttätige Anpassung an die jeweils vorherrschenden Preßbedingungen erfolgen kann. Bei Beginn des Preßvorganges ragt dabei die schwenkbare Begrenzungswand weit in den Vorpreßkanal hinein, so daß ein hoher Preßwiderstand gegeben ist und somit der Preßgutstrang von Anfang an mit gleichmäßiger Dichte ausgebildet wird. Bei weiterem Erntegutzufluß wird die Konizität des Vorpreßkanals reduziert, so daß in Endstellung die Begrenzungswand parallel zur gegenüberliegenden Kanalwand verläuft. Sollte durch ungleichmäßige Erntegutzufuhr, z. B. bei unregelmäßigen Erntegut-Schwaden, die Preßdichte abnehmen, schwenkt die Begrenzungswand wiederum unter Federvorspannung nach innen, so daß eine Vergleichmäßigung der Preßdichte erreicht wird.

Zudem wird durch die unter Federvorspannung mit hohem Druck anliegende Begrenzungswand eine Art Walzwirkung und damit eine Glättung der Preßgutstrang-Oberfläche erzielt.

Da mit der Ballenpresse verschiedenartiges Erntegut gepreßt werden soll, ist es zweckmäßig, die Federspannung der Federanordnung durch eine Spannvorrichtung, beispielsweise eine Handkurbel zu verändern, um hierdurch verschiedene Vorpreßgrade und damit letztendlich die Endverdichtung des Ballens einstellen zu können.

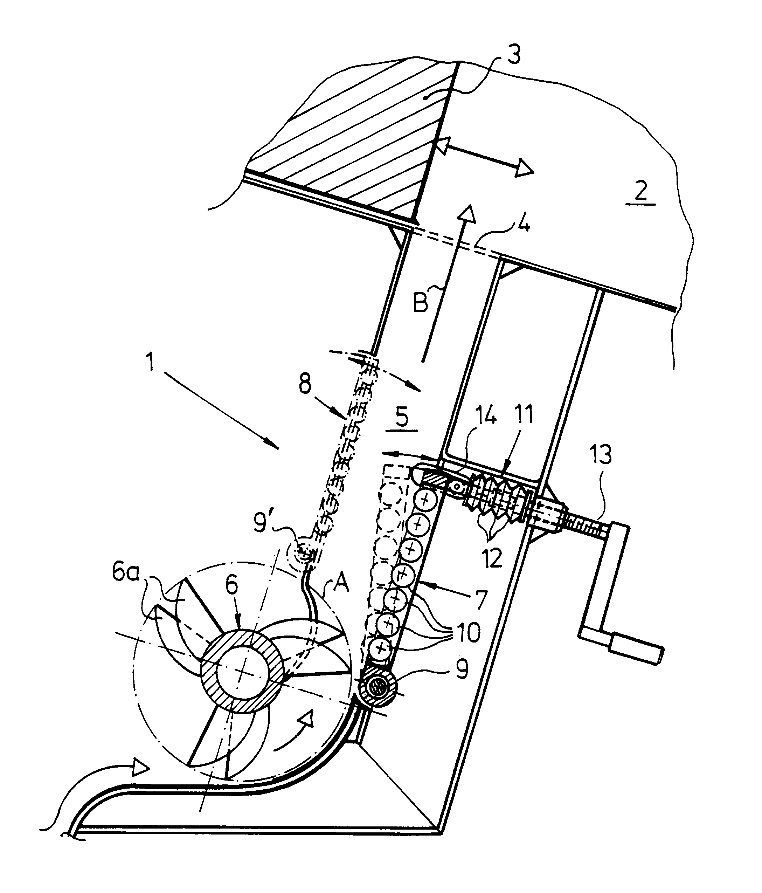

Weitere vorteilhafte Ausgestaltungen sind Gegenstand der abhängigen Ansprüche. Ein Ausführungsbeispiel wird nachfolgend anhand der Zeichnung näher erläutert und beschrieben.

In der einzigen Figur der Zeichnung ist eine Ballenpresse 1 für landwirtschaftliches Erntegut ausschnittsweise dargestellt, das einen in etwa horizontal ausgerichteten, liegenden Ballenkanal 2 aufweist, in dem ein Preßkolben 3 hin- und herbewegbar ist. Im Boden des Ballenkanals 2 ist eine rechteckige Überschiebeöffnung 4 vorgesehen, durch die das Erntegut in den Ballenkanal 2 in Form eines Preßgutstranges übergeführt wird und dann von dem Preßkolben 3 weiterverdichtet und durch eine am hinteren Ende des Ballenkanals 2 vorgesehene, nicht näher dargestellte Ausschiebeöffnung als Rechteckballen ausgeschoben wird. Diese Bauart ist als Strangballenpresse bekannt.

Unterhalb der Überschiebeöffnung 4 ist ein im Querschnitt rechteckiger Vorpreßkanal 5 vorgesehen, der durch eine vordere und hintere Begrenzungswand 7, 8 sowie durch nicht näher bezeichnete Seitenflächen begrenzt ist. Am unteren Ende des Vorpreßkanals 5 ist eine Vorpreßtrommel 6 vorgesehen, zu der das Erntegut über eine nicht näher dargestellte Pickuptrommel zugeführt wird und bei der Drehbewegung entgegen dem Uhrzeigersinn in den Vorpreßkanal 5 gepreßt und zu einem Preßgutstrang verdichtet wird. Die Vorpreßtrommel 6 weist vorzugsweise starre, schraublinienförmig am Umfang versetzte Zinken 6a auf, deren Umlaufbereich durch einen Kreis A angedeutet ist. Kurz nach der Stelle, an der sich der Umlaufkreis A von der Rückwand 7 löst, ist ein Schwenkgelenk 9 vorgesehen, durch das die Begrenzungswand, hier die Rückwand 7, des Vorpreßkanals 5 schwenkbar gelagert ist. Die Rückwand 7 ist in Preßrichtung (Pfeil B) mit einer Vielzahl von Rollen 10 versehen, die sich bevorzugt über die Breite (hier senkrecht zur Zeichenebene) des Vorpreßkanals 5 erstrecken. Die Neigung der Rückwand 7 gegenüber der Preßrichtung (Pfeil B) läßt sich durch eine Stell- oder Spannvorrichtung (Handkurbel 13) vorwählen, so daß durch die unterschiedliche Konizität die Vorpressung im Vorpreßkanal 5 einstellbar ist, da hierdurch der Preßwiderstand auf das Erntegut geändert wird. An der Spannvorrichtung 13 stützt sich eine Federanordnung 11 ab, die hier bevorzugt aus mehreren Tellerfedern 12 besteht, so daß die schwenkbare Rückwand 7 jeweils die durch eine Langloch-Führung 14 begrenzte, am weitesten in den Vorpreßkanal 5 hineinragende Stellung (strichliert eingezeichnet) einnimmt. Hierdurch wird der Querschnitt des Vorpreßkanals 5 etwa auf die Hälfte reduziert, so daß bei Beginn des Preßvorganges ein hoher Preßwiderstand und damit bereits bei Beginn eine hohe Preßdichte erzielt wird.

Durch Wahl der Federanordnung 11 oder durch Verstellung der Federanordnung 11 über die Spannvorrichtung 13 (z. B. Handkurbel) läßt sich die erreichbare Preßdichte steuern. Die Spannvorrichtung 13 kann auch als Hydraulikzylinder ausgebildet sein, so daß durch Veränderung des Anlenkpunktes der Federanordnung 11 deren Federkraft auf die schwenkbare Begrenzungswand 7 oder 8 vom Fahrerstand aus fernsteuerbar ist.

Zur Erhöhung des Preßwiderstandes in dem Vorpreßkanal 5 läßt sich auch die Vorderwand 8 analog der Rückwand 7 schwenkbar und mit Rollen 10 besetzt ausführen (wie dies strichpunktiert angedeutet ist), so daß sich eine düsenartige Verengung des Vorpreßkanals 5 ergibt. Erst bei entsprechend hohem Vorpreßdruck, d. h. bei entsprechender Füllung mit Erntegut durch die Rotation der Vorpreßtrommel 6 weiten sich die nahezu berührenden oberen Enden der schwenkbaren Vorder- und Rückwand 7, 8 auf und lassen den gebildeten Erntegutstrang in Richtung auf die Überschiebeöffnung 4 und den Ballenkanal 2 in Preßrichtung B durch. Da hierbei der Erntegutstrang nach der Vorpreßtrommel vorwiegend an den Rollen 10 der Begrenzungswände (Vorderwand 8 und/oder Rückwand 7) vorbeigeführt wird, ist die Reibung und damit die nötige Antriebsleistung relativ gering. Zudem werden damit die Oberflächen des Erntegutstranges infolge einer Art Walzwirkung geglättet. Da die Belastungsrichtung der Rollen praktisch parallel zu der Preßrichtung B erfolgt, ist die Durchbiegung und damit die Lagerbelastung der Rollen 10 sehr gering. Damit können kleinbauende Rollen 10 verwendet werden. Zudem ist durch die geringe Belastung das Spaltmaß zwischen den eng aufeinanderfolgenden Rollen 10 sehr eng zu wählen, so daß neben der ohnehin günstigeren Belastungsrichtung in Preßrichtung B ein Erntegutverlust durch die Spalten zwischen den Rollen 10 vermieden wird.

Der zur Mitte des Vorpreßkanals 5 gerichtete Schwenkweg der Begrenzungswand (Rückwand 7 und/oder Vorderwand 8) ist durch die Langloch-Führung 14 etwa auf den halben Vorpreßkanal-Querschnitt begrenzt. Bei Belastung der Begrenzungswände 7, 8 sind diese durch die Wahl der Langloch-Führung 14 etwa auf die parallele Ausrichtung (entspricht etwa dem Querschnitt der Überschiebeöffnung 4) begrenzt. Alternativ hierzu kann auch das Federpaket der Federanordnung 11 als Anschlag dienen, so daß bei Belastung der Begrenzungswände (Vorderwand 8, Rückwand 7), insbesondere bei hohem Erntegut-Durchsatz der Vorpreßtrommel 6 die Begrenzungswände 7, 8 nicht über die im wesentlichen parallele Lage hinaus verschwenkt werden können, um somit eine Reduzierung der bereits erreichten Verdichtung zu vermeiden.

Um eine rasche und sichere Weiterförderung des Preßgutstranges im Vorpreßkanal 5 zum Ballenkanal 2 sicherzustellen, können einzelne oder auch alle Rollen 10 der Rück- und/oder Vorderwand 7, 8 in Preßrichtung B fördernd angetrieben sein. Andererseits können einzelne Rollen 10 auch zusätzlich gebremst werden, wie dies an sich aus der FR-A-895746 bekannt ist. Hierdurch kann insbesondere beim Beginn des Erntevorganges der Preßwiderstand und damit der Gegendruck auf das von der Vorpreßtrommel geförderte Erntegut erhöht werden, so daß eine besonders hohe Vorverdichtung erzielbar ist. Die Antriebsgeschwindigkeit der Rollen 10 kann dabei zur Anpassung an den jeweiligen Erntegutdurchsatz stufenlos variiert werden. Zu Beginn des Preßvorganges könnten die Rollen 10 auch stillstehen und hierbei blockiert werden oder sogar kurzzeitig entgegen der Preßrichtung B angetrieben werden.

**Patentansprüche**

1. Ballenpresse (1) für landwirtschaftliches Erntegut mit
   - einem Ballenkanal (2),
   - einem darin hin- und herbewegbaren Preßkolben (3),
   - einer im Boden des Ballenkanals (2) vorgesehenen Überschiebeöffnung (4),
   - einem Vorpreßkanal (5), der mit seinem oberen Ende an die Überschiebeöffnung (4) angeschlossen ist und
   - einer Vorpreßtrommel (6), die am unteren Ende des Vorpreßkanals (5) angeordnet ist, wobei eine Begrenzungswand (7, 8) des Vorpreßkanals (5) zur Veränderung des Durchlaßquerschnittes verstellbar ist,
   dadurch gekennzeichnet, daß
   die Begrenzungswand (7, 8) des Vorpreßkanals (5) im Anschluß an den Umlaufbereich (A) der Vorpreßtrommel (6) an ihrem unteren Ende ein Schwenkgelenk (9) aufweist und mit einer Vielzahl von Rollen (10) besetzt ist, sowie am zur Überschiebeöffnung (4) hin gelegenen Ende gegen eine Federanordnung (11) abgestützt ist.

2. Ballenpresse nach Anspruch 1, dadurch gekennzeichnet, daß die Federanordnung (11) aus mehreren Tellerfedern (12) besteht.

3. Ballenpresse nach Anspruch l oder 2, dadurch gekennzeichnet, daß die Federspannung der Federanordnung (11) durch eine Spannvorrichtung (13) veränderbar ist.

4. Ballenpresse nach einem der vorhergehenden Ansprüche, dadurch gekennzeichnet, daß sich die Rollen (10) über die Breite des Vorpreßkanals (5) erstrecken und eng aufeinanderfolgend angeordnet sind.

5. Ballenpresse nach einem der vorhergehenden Ansprüche, dadurch gekennzeichnet, daß der Schwenkwinkel der Begrenzungswand (7, 8) im Bereich von 3° bis 30° liegt, wobei die Begrenzungswand (7, 8) in der belasteten Schwenkstellung parallel zur gegenüberliegenden Begrenzungswand (8 bzw. 7) verläuft und in der entlasteten Schwenkstellung den Vorpreßkanal (5) konisch verengt.

6. Ballenpresse nach Anspruch 5, dadurch gekennzeichnet, daß der Schwenkwinkel der Begrenzungswand (7, 8) durch eine Langlochführung (14) begrenzt ist.

7. Ballenpresse nach Anspruch 5 oder 6, dadurch gekennzeichnet, daß der zum Vorpreßkanal (5) hin gerichtete Schwenkweg der Begrenzungswand (7, 8) auf den halben Vorpreßkanal-Querschnitt begrenzt ist.

8. Ballenpresse nach wenigstens einem der vorhergehenden Ansprüche, dadurch gekennzeichnet, daß die Rollen (10) frei rotierbar sind.

9. Ballenpresse nach wenigstens einem der vorhergehenden Ansprüche, dadurch gekennzeichnet, daß die Rollen (10) in Preßrichtung (B) angetrieben sind.

10. Ballenpresse nach Anspruch 3, dadurch gekennzeichnet, daß die Spannvorrichtung (13) durch einen Hydraulikzylinder gebildet ist und fernsteuerbar ist.